Europäisches Patentamt

(19) European Patent Office

Office européen des brevets

(11) Publication number: **0 045 612**
**B1**

(12) **EUROPEAN PATENT SPECIFICATION**

(45) Date of publication of patent specification: **14.11.84**

(21) Application number: **81303439.4**

(22) Date of filing: **27.07.81**

(51) Int. Cl.³: **H 01 R 4/70**

(54) Heat recoverable connector.

(30) Priority: **28.07.80 US 172897**

(43) Date of publication of application:
**10.02.82 Bulletin 82/06**

(45) Publication of the grant of the patent:
**14.11.84 Bulletin 84/46**

(84) Designated Contracting States:
**AT BE CH DE FR IT LI NL SE**

(56) References cited:
**FR-A-2 114 004**
**FR-A-2 286 528**
**FR-A-2 337 445**
**US-A-3 721 749**

(73) Proprietor: **RAYCHEM CORPORATION**
**300 Constitution Drive**
**Menlo Park California 94025 (US)**

(72) Inventor: **Diaz, Stephen Hunter**
**27910 Roble Blanco**
**Los Altos Hills California 94022 (US)**

(74) Representative: **Dlugosz, Anthony Charles et al**
**Raychem Limited Intellectual Property Law**
**Department Faraday Road**
**Dorcan Swindon Wiltshire (GB)**

Courier Press, Leamington Spa, England.

## Description

This invention relates to a heat-recoverable connector device.

Various forms of heat-recoverable connector are well known, for example as described in US—A—3243221, US—A—3721749, and FR—A—2 337 445. In particular, FR—A—2 337 445 describes a connector having a unitary body having a number of heat-recoverable portions into which objects, e.g. wires, can be inserted to contact electrical contacts within the connector. The device includes a number of solder inserts which fuse and form solder connections when the recoverable portions of the connector are recovered.

US—A—3 721 749 describes a connector for connecting multiconductor flat cable comprising an open-ended hollow heat-recoverable member having a train of longitudinal seams across the width thereof integrally bonding the opposed walls thereof to one another to define a plurality of spaced parallel tubular members for receiving individual conductors of the cable. The tubular members contain rings of solder which melt to form solder connections when the device is recovered about the flat cable.

Alsp, FR—A—2 286 528 discloses a self-heating splice case for enclosing a splice in an electrical cable, which comprises an upper heat-recoverable casing having inlets for the cables, and a lower heat-stable bottom portion which are assembled together after completion of the splicing operation and then recovered about the splice.

The present invention provides heat recoverable connectors which may have improved positional stability during recovery.

The invention accordingly provides a connector device for connecting elongate objects, which comprises

a first sheet of polymeric material which is substantially dimensionally heat-stable;

a second sheet of polymeric material which has been expanded from an original heat-stable configuration to a dimensionally heat-unstable configuration, the first sheet being bonded to the second sheet after expansion of the second sheet so as to bridge at least a substantial part of the second sheet with dimensionally heat-stable material, the first and second sheets together defining an open ended hollow structure onto the ends of which the objects may be inserted; and

an insert positioned between the first and second sheet within the open hollow structure the sheets being such that they will not melt at a temperature high enough to activate the insert and that the application of heat will cause the second sheet to recover about the inserted object while the first sheet maintains its heat-stable configuration.

Preferably, the second sheet is arranged to provide an open concave structure of heat recoverable polymeric material and the first sheet is bonded across the heat recoverable concave structure so as to bridge at least a substantial part of it with heat-stable material.

It will be appreciated that the bonding (preferably bridging) of the heat-recoverable structure with heat-stable material according to this invention advantageously enhances the positional stability of the device during recovery, since the heat-stable material can be positively located and will tend not to distort out of position while the remaining heat-recoverable material of the device is recovering. This is especially useful in devices having two or more heat-recoverable concave portions, since the bridging of these by a single heat-stable sheet (common to all the concave portions) will tend to preserve their centre-to-centre spacing during recovery.

By "substantially dimensionally heat stable" is meant that the first sheet is not heat-recoverable or is heat-recoverable only to an insignificant extent relative to the heat-recoverability of the second sheet. In practice, polymer sheets are seldom completely without heat recoverability, but the degree of inherent heat shrinkage is usually far less than required for heat-recoverable connectors to operate effectively.

Preferably substantially all of the first sheet is in the heat stable state. The preferred form of concave structure is an elongate channel, substantially the whole length which is preferably bridged by the heat-stable material. The sheets are preferably used to form a device wherein the second sheet has been deformed to provide two or more concave working zones the second sheet is bonded to the first sheet so as to maintain the spacing between centres of the working zones during recovery of the device.

Hollow heat-recoverable articles have generally been produced by forming a polymer into the desired heat-stable configuration, simultaneously or subsequently cross-linking the polymer in its heat-stable configuration, heating and then deforming the article, and then cooling the article while in the deformed state so that the deformed configuration is retained. In use, since the deformed state of the article is heat-unstable, application of heat will cause the article to revert or tend to revert to its original heat-stable configuration. Further, as a result of cross-linking, the article may be heated to a temperature considerably above its melting point without melting the article.

When it is desired to provide such articles with inserts, it has frequently been necessary to load such inserts after the completion of the article on an item-by-item basis, e.g. by way of a manual or semi-automatic finishing process. Even when automatic or continuous methods have been available, e.g. in the case of articles coated internally by coextrusion methods, such manufacture is relatively expensive. Frequently, however, the hollow articles are of such a configuration that they cannot be produced directly by extrusion, such as when they are of non- constant cross-section along any axis thereof. For example, boots, udders (as used herein the term udder refers to an article comprising a plurality of intersecting hollow regions employed in the termination of electrical cables, and also commonly referred to as cable "break-outs"), end-caps, or the like articles have been formed into the desired heat stable configuration on an item-by-item basis by moulding, e.g. by injection, compression or transfer moulding techniques.

Previously it has been known that one may form a hollow, generally tubular connector device having solder therein and wherein substrates such as electrical wires may be inserted in the connector device, so that, upon application of heat, the hollow device collapses and the solder fuses, thereby connecting the substrates as is generally set forth in U.S. Patent 3,243,211. In order to make such a heat recoverable device, the hollow connector had to be cross-linked and expanded prior to the insertion of the insert by hand or, at the very best, by a semi-automatic process, either of which tends to be quite expensive.

The present invention may alleviate these difficulties, in addition to providing improved stability as aforesaid.

In one embodiment of the applicant's invention, the device comprises a first sheet having localized expanded portions defining heat-recoverable pockets; a second sheet being expanded and formed into working and bonding zones, and inserts being placed between the sheets, which are placed in the desired registry with one another and bonded together with the inserts between them. The connector may be substantially cross-linked to allow heating of the sheets beyond their melting temperature, as will be more fully appreciated hereinafter.

Objects to be connected may then be inserted in the connector and heat may be applied. Depending upon the material chosen, the second sheet may recover before the first sheet. Upon continued application of heating, and (if desired) increased heating, the first sheet may then recover, ejecting the working matter into the partially or fully collapsed working zones which have gripped the objects inserted therein.

It may be seen that there will be substantially no recovery of the bonding zones, because the bonded portion of the second sheet, even if expanded, is unable to recover as a result of its bonding to the unexpanded material of the first sheet. Thus, the distance between the center lines of the working zones tends to remain the same.

Unless the polymeric material of the sheets has special properties it will ordinarily melt away under the heat needed to activate the inserts, and the necessary properties to resist such melting are usually achieved by cross-linking the polymeric material, preferably after expanding it at a temperature below its cyrstalline melting point or softening point. This permits the inserts to be loaded, automatically during the expansion step followed by bonding and subsequently substantially cross-linking the materials.

The inserts may comprise any material that is desired to be located inside of the hollow heat-recoverable article to perform the desired function. One type of insert is fusible at the recovery temperature of the article, e.g. a hot-melt adhesive or a solder insert, such as described in U.S. Patent No. 3,243,211. A second type of insert is a sealant, e.g. a highly viscous liquid, paste, grease, thermoplastic or thermoset resin. A third type of insert is a liner. A fourth type of insert is an electrical screen, for example, a liner in the form of an electrically conducting braid.

In many cases, the insert will comprise solder. As used herein, solder means any metal or metallic alloy used to join metallic surfaces by melting that metal or metallic alloy and then allowing it to cool. The solder may contain flux core and/or may be coated with flux.

Polymeric materials suitable for forming the sheets of this invention are well-known in the art, and indeed most polymers, upon suitable treatment, may be used.

The polymeric materials can be tailored to suit the intended use by the addition of fillers, e.g. semi-conducting fillers or anti-tracking agents, flame retardants, plasticisers, pigments, stabilisers and lubricants, or where necessary, e.g. where the polymeric material is substantially non-crystalline, a hold-out agent such as a thermoplastic polymer, e.g. polyethylene, may be included in the material.

The polymeric material may be cross-linked by irradiation, for example, by means of an electron beam, or it may be chemically cross-linked. Whichever cross-linking process is used, it may be advantageous to incorporate one or more co-curing agents such as are well-known in the art.

According to another aspect, the invention provides a connector device for connecting elongate objects, which comprises two or more hollow open ended heat-recoverable portions capable of receiving the objects to which connections are to be made, the device being formed from two sheets of polymeric material at least one of which has been expanded from an original heat-stable configuration to a dimensionally heat-unstable configuration and thereafter bonded to the other sheet along a plurality of bonding zones which alternate with a plurality of working zones in which the sheets are not bonded together, the working zones providing the hollow open-ended heat-recoverable portions, and the bonding zones forming compliant regions arranged to elongate or give way between the hollow portions under tension generated by recovery of the hollow portions onto elongate objects spaced at a fixed distance from each other. Preferably the device is formed by fusion welding the two sheets together.

Embodiments of the present invention will now be described by way of example with reference to the accompanying drawings wherein:—

Figure 1 is a perspective view of a first embodiment of this invention.

Figure 2 is a perspective view of the components forming the embodiment of Figure 1.

Figure 3 is a cross-sectional view of the working zone of the present invention showing objects inserted in the working zone before the application of heat.

Figure 4 depicts the working zone of Figure 3 during the application of heat.

Figure 5 depicts the working zone of Figure 3 after the completion of heating.

Figure 6 is a perspective view of a second embodiment of this invention wherein the second sheet has omega-shaped working zones.

Figures 7A and 7B illustrate third and fourth embodiments of the instant invention. In Figure 7A, two types of inserts are present; while in Figure 7B, the inserts are in the form of strips.

Figure 8 is a partial cut-away view of a fifth embodiment of this invention comprising an offset connector.

Figure 9 is a partial cut-away view of a sixth embodiment of this invention comprising a right angle connector.

Figures 10 and 11 are schematic perspective views of embodiments of another aspect of this invention wherein each has a compliant region for constant center spacing before and after heat recovery.

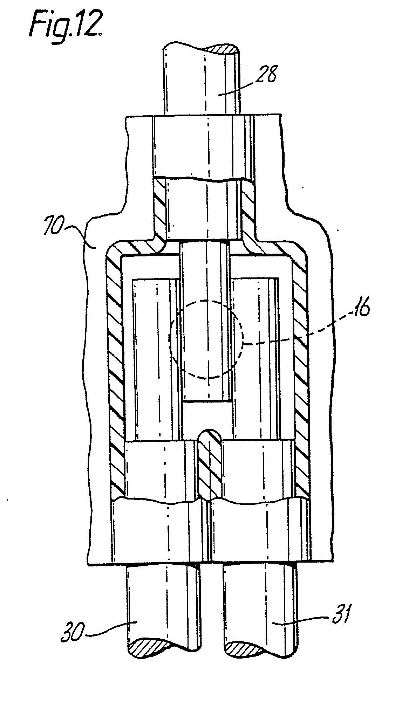

Figure 12 illustrates an alternative connector in the form of an "udder" 70 having an insert 16 for connecting objects 28, 30, 31 as shown.

In the drawings, like reference characters designate like or corresponding parts throughout the several views.

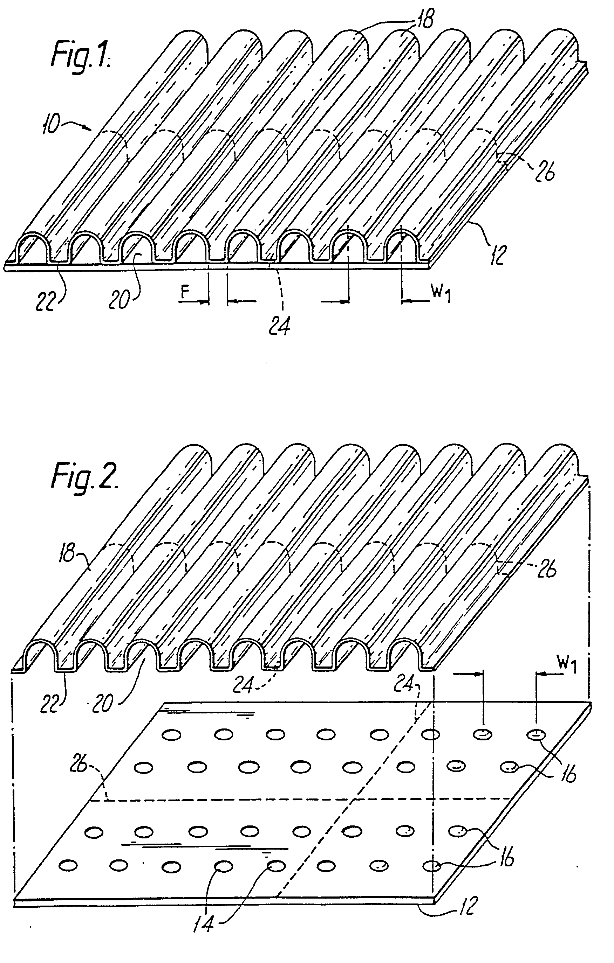

Figure 1, shows a first embodiment of the invention generally indicated at 10, a hollow connector device.

As seen in Figures 1 and 2, the connector comprises a first sheet 12 which includes localized expanded portions defining pockets 14 (Fig. 2) for holding inserts, such as are shown at 16. For reasons explained heretofore, the expansion is sheet 12 creating pockets 14 occurs at a temperature below the melting point of the material of sheet 12. Additionally, the pockets 14 may be formed by pressing the inserts 16 into the first sheet 12.

The rest of sheet 12 remains unexpanded, so that even after cross-linking it will not shrink on application of heat, and will thereby maintain the distance $W_1$ between the pockets.

The pockets 14 may be created by automatic methods, such as by "dimpling" prior to insertion of the inserts or by mass insertion or embedding of the inserts 16.

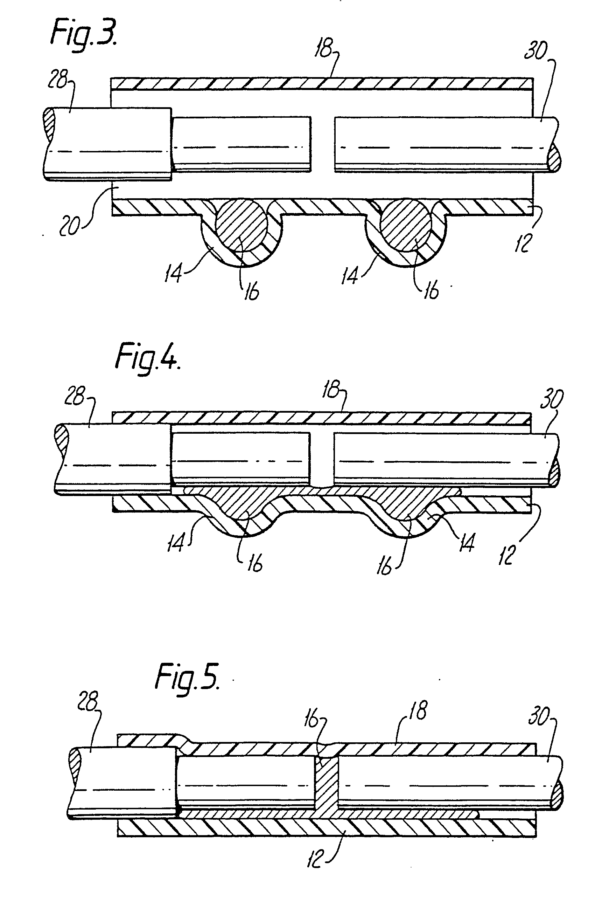

In this embodiment of the first sheet, inserts 16 are located within the pockets 14 to achieve un unobstructed passageway for the insertion of objects to be connected, such as shown in Figure 3. The protrusions formed in the first sheet by pockets 14 and inserts 16 may conveniently be used with a suitable jig or other means (not shown) to align the connector with the objects with which it is to be employed.

The connector 10 also comprises a second sheet 18 having an original heat-stable shape. This sheet has been expanded to a second heat-unstable shape and formed into alternating working and bonding zones 20 and 22 as indicated in Figures 1 and 2.

As shown in Figure 2, the first sheet 12 has been loaded with inserts 16. The sheets 12 and 18 are then aligned with one another and are bonded together by generally known methods with the working inserts between them.

The fused sheets may then be substantially cross-linked, thereby creating a non-melting, hollow, heat-recoverable connector by automatic mass production methods.

The sheets may then be broken up into connectors of a predetermined size by cutting along perforations such as those shown at 24 and 26.

In the above described embodiment, differential recovery properties desired may be achieved by expansion of the two sheets to different degrees, even when the sheets are of the same material. It is also possible, when desired, that recovery occur at different times or temperatures in different zones. For instance, if it is desirable for the second sheet to recover before the first, the second sheet could be pigmented to increase infrared absorption, while the first sheet is left clear. Then, when heated by infrared radiation, the second sheet would recover before the first sheet. Additionally, since there are two separate sheets, the first sheet may be made of a material such as polyethylene which has a recovery temperature in the range of about 60°C to about 110°C, while the second sheet could be made from ethylene/vinyl acetate copolymer which may have a recovery temperature between about 30°C and about 90°C. Thus, when heat is applied to the connector, the working zones of the second sheet recover before the first sheet, clamping down upon the substrates inserted therein, while not melting. Upon continued application of heat, the first sheet recovers, forcing the inserts into the working zones and into contact with the objects. As the recovery temperature of "cold expanded" materials, i.e. those expanded below their melting point, is dependent on the expansion temperature, it is possible for the two sheets to recover at different temperatures, even when they are of the same material.

The above described phenomenon is shown in some detail in Figures 3—5 and is described in more detail in the following paragraphs.

Objects 28 and 30 are inserted into the working zone 20 of the connector as shown in Figure 3. Upon the application of heat, the zone 20 recovers first, holding the objects 28 and 30 within the connector in the desired relationship to each other and to inserts 16, as shown in Figure 4. Also as shown in Figure 4, the inserts have begun to soften and the pockets 14 to recover, partially ejecting the inserts into the working zone 20.

Figure 5 illustrates the connector fully recovered after the application of heat. As can be seen, second sheet 18 conforms to objects 28 and 30, sealing the connected objects 28 and 30 against first sheet 12 which, as illustrated, has fully ejected the inserts 16 into the working zone 20 and around and between the articles 28 and 30. Also as shown, the pockets 14 have recovered fully and the first sheet 12 has returned to its unexpanded shape. The connector including the substrates is fully sealed by the flow of the inserts and the recovery of the sheets 12 and 18.

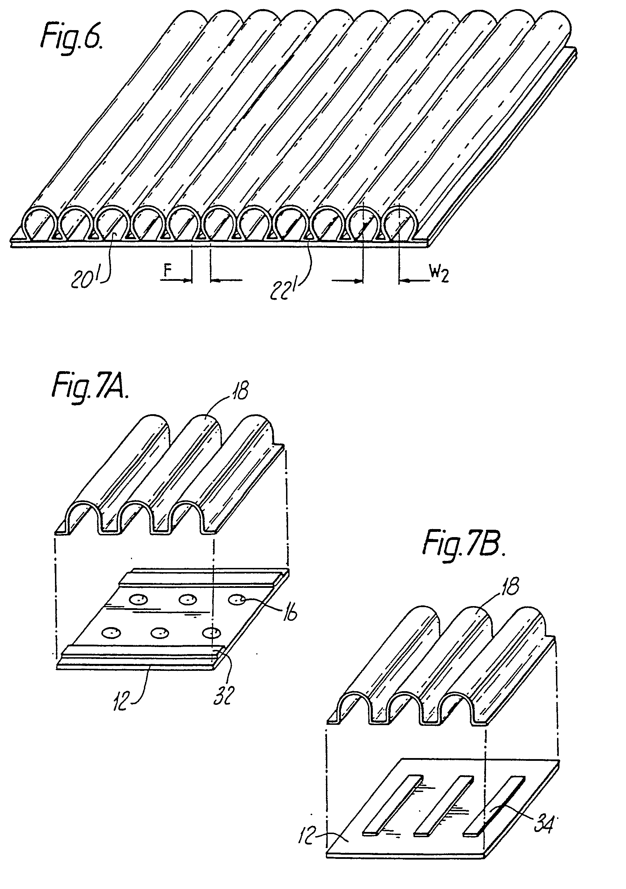

In particular applications, it may be desirable for the connector to connect closely spaced terminals. For such an application it is desirable to use a second sheet which has been formed into a plurality of omega shapes, as illustrated in Figure 6 and denoted by the number 20. As can be seen in Figure 6 the width of the bonding zone generally denoted by the letter F is the same as the width of the bonding zone generally shown in Figure 1 and also indicated as being of width F.

However, the omega-shaped working zone permits a smaller center-to-center spacing than the working zone shape shown in Figure 1 and indicated by the numeral 20. As can be seen on comparing Figures 1 and 6, the distance between the center lines of the working zones 20 is $W_1$ in Figure 1, while the distance between the center lines of the working zones of 20', shown in Figure 6 is $W_2$, a smaller distance.

Thus, while the omega shape affords space to insert a greater number of objects over the width of the connector, the bonding zone 22' has width equal to that of the bonding zone 22 of the embodiment of Figure 1. The omega shape shown in Figure 6 maintains the desired property of keeping the center-to-center spacing of the working zones constant after recovery while adding the desirable feature of permitting more objects to be connected for the same sized connector.

Different types of inserts may be used within the connector, as shown in Figure 7. Figure 7A shows solder inserts 16 between barriers 32 which may comprise sealants.

Figure 7B shows the use of strip-shaped inserts 34, unlike the generally spherical inserts shown in Figure 2.

As is best illustrated by 32 and 34 of Figure 7, it is possible that the insert material may be printed on the surface of the first sheet 12. Also, as was suggested in the description of Figure 2, pockets 14 may be preformed in first sheet 12 and, rather than impressing solid insert material into these pockets, the insert material may be printed into them.

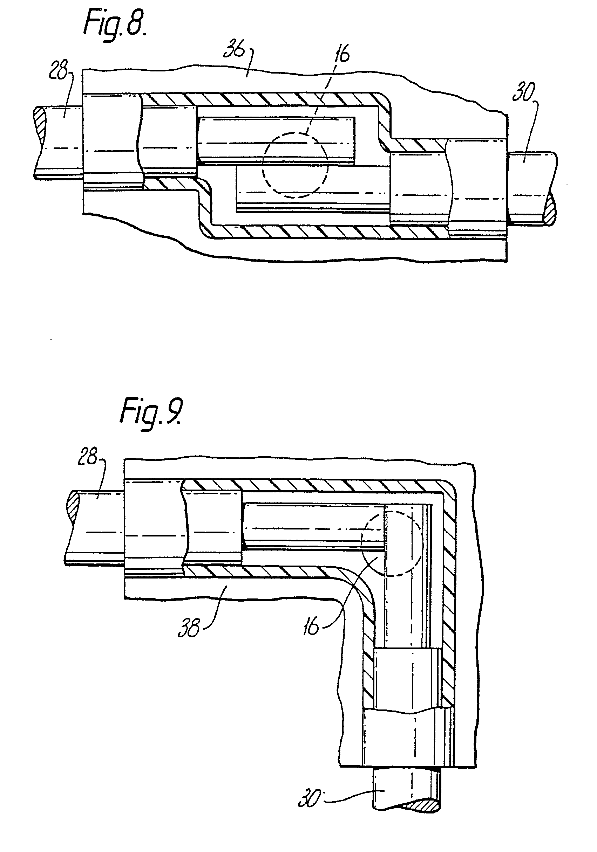

Additionally, the connector may comprise an offset connector 36, as shown in Figure 8. In such a connector, the substrates to be connected overlap, rather than abutting at the ends only, as has been shown in Figures 3—5.

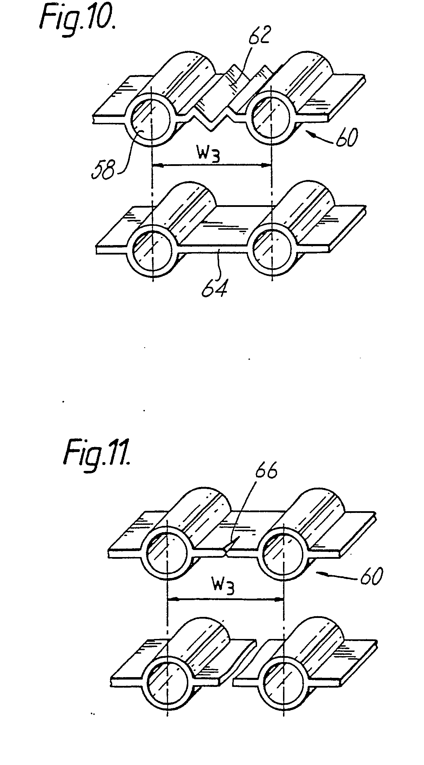

Figure 9 shows a right angle connector indicated by the numeral 38, wherein substrates 28 and 30 may be inserted into the connector at right angles and connected at that angle. As can be seen, insert 16 is placed in the manner described above.

In both Figures 8 and 9, that part of the second sheet 18 defining the working zone has been partially cut away to reveal the positional relationships between the substrates 28 and 30 and the insert 16.

Figures 10 and 11 show embodiments of the second aspect of the invention, wherein two sheets of polymeric material of approximately the same expansion ratio and/or recovery temperature have been bonded together along a plurality of bonding zones 62 which alternate with a plurality of working zones 58 in which the sheets are not bonded together.

The working zone 58 of the embodiment of Figure 10 is substantially the same as that of the earlier embodiments. However, the bonding zone 62 comprises a compliant region wherein, as shown in the lower part of Figure 10, upon recovery the compliant region recovers while the working zones 58 are held, such as by fixed terminals upon which they are emplaced.

Thus the recovery occurs laterally in the compliant region while the working zone center line spacing $W_3$ remains constant.

Figure 11 illustrates a device having an alternative compliant region before and after recovery. In the embodiment of Figure 11 the compliant region 66 comprises a weakened area 66 approximately midway between center lines of the working zones which, upon recovery, as shown in the lower part of Figure 11, separates while the working zones 58 are held in place, as described above.

For the sake of clarity the working zones 58 are depicted in the lower part of the figures as having their initial configuration although, as will be appreciated, on recovery of the device the working zones will also recover about the object to be connected (not shown).

These embodiments are generally intended for use with fixed terminal connectors wherein, upon recovery, any lateral recovery will occur in the compliant region as described above.

Substantial reference has been made throughout to cross-linked polymeric material as being heat-resistant (not melting at the temperature of activation of the inserts) and/or heat-recoverable. It should be understood that there are polymeric materials which possess heat resistance and/or recoverability without cross-linking, and the use of such materials is to be considered as within the scope of this invention.

## Claims

1. A connector device (10) for connecting elongate objects, which comprises:

a first sheet (12) of polymeric material which is substantially dimensionally heat-stable;

a second sheet (18) of polymeric material which has been expanded from an original heat-stable configuration to a dimensionally heat-unstable configuration, the first sheet being bonded to the second sheet after expansion of the second sheet so as to bridge at least a substantial part of the second sheet with dimensionally heat-stable material, the first and second sheets together defining an open ended hollow structure (20) into the ends of which the objects may be inserted; and

an insert (16) positioned between the first and second sheet within the open hollow structure (20); the sheets being such that they will not melt at a temperature high enough to activate the insert (16) and that the application of heat will cause the second sheet to recover about the inserted object while the first sheet maintains its heat-stable configuration.

2. A device according to claim 1 wherein the second sheet (18) is arranged to provide an open concave structure of heat-recoverable polymeric material and the first sheet (12) is bonded across the heat recoverable concave structure so as to bridge at least a substantial part of it with heat-stable material.

3. A device according to claim 2 wherein the second sheet (18) is arranged to provide two or more separate concave structures (20).

4. A device according to claim 3 wherein the first body bridges two or more of the separate concave structures to form a plurality of open-ended hollow structures (20).

5. A device according to any of claims 2 to 4 wherein the or each concave structure (20) is in the form of an elongate channel substantially the whole length of which is bridged by the heat-stable material.

6. A device according to claim 4, having at least one fusible insert (16) positioned between said first and second sheets at least within each of the open ended hollow structures (20).

7. A device according to claim 6 wherein the first sheet (12) includes localized expanded portions (14) defining pockets for retaining the inserts (16) on the first sheet (12).

8. A device according to claim 7 wherein the pockets (14) have been formed by pressing the inserts (16) into the sheet.

9. A device according to claim 8 wherein the inserts (16) have been pressed into the first sheet (12) at a temperature below the crystalline melting point of the first sheet material.

10. A device according to any one of the preceding claims wherein the second sheet (18) has been deformed to provide two or more concave working zones (20) separated by bonding zones (22) by which bonding zones the second sheet is bonded to the first sheet (12) so as to maintain the spacing between centres of the working zones during recovery of the device.

11. A device according to any of the preceding claims, wherein the first and second sheets are initially of cross-linkable or partially cross-linked material and are bonded and subsequently cross-linked.

12. A device according to any of the preceding claims, wherein the bonding is effected by fusion welding.

13. A connector device for connecting elongate objects, which comprises two or more hollow open ended heat-recoverable portions (58) capable of receiving the objects to which connections are to be made, the device being formed from two sheets of polymeric material at least one of which has been expanded from an original heat-stable configuration to a dimensionally heat-unstable configuration and thereafter bonded to the other sheet along a plurality of bonding zones (62) which alternate with a plurality of working zones (58) in which the sheets are not bonded together, the working zones providing the hollow open-ended heat-recoverable portions, and the bonding zones forming compliant regions (62, 66) arranged to elongate or give way between the hollow portions under tension generated by recovery of the hollow portions onto elongate objects spaced at a fixed distance from each other.

14. A device according to claim 13 wherein both the sheets have been deformed to provide the heat recoverable working zones (58), the working zones having substantially the same expansion ratio and substantially the same recovery temperature in each sheet.

15. A device according to claim 13 or claim 14, wherein the sheets are initially of cross-linkable or partially cross-linked material and are bonded and subsequently cross-linked.

16. A device according to any of claims 13 to 15 wherein the compliant regions (62) comprise corrugations which elongate upon the said recovery of the hollow portions.

17. A device according to any of claims 13 to 16 wherein the compliant regions comprise weakened areas (66) which give way to separate the said hollow portions (58) from each other upon the said recovery of the hollow portions.

18. A device according to any of claims 13 to 17 formed by fusion welding together of a first and a second sheet of polymeric material.

## Revendications

1. Un dispositif d'assemblage (10) pour joindre des objets allongés qui comprend:

une première feuille (12) de matière polymère qui est sensiblement dimensionnellement stable à la chaleur;

une seconde feuille (18) de matière polymère qui a été dilatée à partir d'une configuration d'origine stable à la chaleur sous une configuration dimensionnellement instable à la chaleur, la première feuille étant liée à la seconde feuille de façon à former au-dessus d'au moins une partie importante de la seconde feuille un pont en une matière dimensionnellement stable à la chaleur, les première et seconde feuilles délimitant, en combinaison, une structure creuse (20) à extrémités ouvertes dans les extrémités de laquelle les objets peuvent être introduits; et

une pièce d'insertion positionnée entre les première et seconde feuilles à l'intérieur de la structure creuse ouverte (20), les feuilles étant telles qu'elles ne fondent pas à une température suffisamment élevée pour provoquer l'activation de la pièce d'insertion (16) et que l'application de chaleur provoque la reprise de sa forme par la seconde feuille autour de l'objet introduit tandis que la première feuille conserve sa configuration stable à la chaleur.

2. Un dispositif selon la revendication 1, dans lequel la seconde feuille (18) est agencée de façon à former une structure concave ouverte de matière polymère à reprise thermique et la première feuille (12) est liée d'un côté et de l'autre à la structure concave de façon à former un pont sur au moins une partie importante de cette dernière avec une matière stable à la chaleur.

3. Un dispositif selon la revendication 2, dans lequel la seconde feuille (18) est agencée pour former deux structures concaves séparées (20) ou davantage.

4. Un dispositif selon la revendication 3, dans lequel le premier corps forme des ponts au-dessus de deux structures concaves séparées ou davantage pour former une série de structures creuses (30) à extrémités ouvertes.

5. Un dispositif selon l'une quelconque des revendications 2 à 4 dans lequel la structure concave ou chaque structure concave (20) se présente sous la forme d'un passage allongé qui a ses bords reliés entre eux sur la quasi-totalité de sa longueur par la matière stable à la chaleur.

6. Un dispositif selon la revendication 4 ayant au moins une pièce d'insertion fusible (16) positionnée entre lesdites première et seconde feuilles au moins à l'intérieur de chacune des structures creuses (20) à extrémités ouvertes.

7. Un dispositif selon la revendication 6, dans lequel la première feuille (12) comporte des parties dilatées localisées (14) formant des poches pour retenir les pièces d'insertion (16) sur la première feuille.

8. Un dispositif selon la revendication 7, dans lequel les poches (18) ont été formées en enfonçant les pièces d'insertion (16) dans la feuille.

9. Un dispositif selon la revendication 8, dans lequel les pièces d'insertion (16) ont été enfoncées dans la première feuille (12) à une température inférieure au point de fusion cristalline de la matière de la première feuille.

10. Un dispositif selon l'une quelconque des revendications précédentes dans lequel la seconde feuille (18) a été déformée pour former deux zones de travail concaves (20) ou davantage séparées par des zones de liaison, zones de liaison au moyen desquelles la seconde feuille est liée à la première feuille (12) de façon à conserver l'espacement entre les centres des zones de travail lors de la reprise du dispositif.

11. Un dispositif selon l'une quelconque des revendications précédentes dans lequel les première et seconde feuilles sont initialement en une matière réticulable ou partiellement réticulée et sont liées et ensuite réticulées.

12. Un dispositif selon l'une quelconque des revendications précédentes, dans lequel la liaison est effectuée par soudage par fusion.

13. Un dispositif d'assemblage pour joindre des objets allongés qui comprend deux parties à reprise thermique creuses (58) à extrémités ouvertes ou davantage capables de recevoir les objets auxquels des connexions doivent être effectuées, le dispositif étant formé de deux feuilles de matière polymère dont au moins l'une a été dilatée à partir d'une configuration d'origine stable à la chaleur sous une configuration dimensionnellement instable à la chaleur et a ensuite été liée à l'autre feuille suivant une série de zones de liaison (62) qui alternent avec une série de zones de travail (58) dans lesquelles les feuilles ne sont pas liées entre elles, les zones de travail formant les parties à reprise thermique creuses à extrémités ouvertes et les zones de liaison formant des régions souples (62, 66) agencées pour s'allonger ou se rompre entre les parties creuses sous la force de traction engendrée par la reprise des parties creuses sur des objets allongés espacés d'une distance fixe les uns des autres.

14. Un dispositif selon la revendication 13, dans lequel les deux feuilles ont été déformées pour former les zones de travail (58) à reprise thermique les zones de travail ayant sensiblement le même taux de dilatation et la même température de reprise dans chaque feuille.

15. Un dispositif selon la revendication 13 ou la revendication 14 dans lequel les feuilles sont initialement en une matière réticulable ou partiellement réticulée et sont liées et ensuite réticulées.

16. Un dispositif selon l'une quelconque des revendications 13 à 15 dans lequel les régions souples (62) comprennent des ondulations qui s'allongent lors de ladite reprise des parties creuses.

17. Un dispositif selon l'une quelconque des revendications 13 à 16, dans lequel les régions souples comprennent des zones de plus faible résistance qui se déchirent pour séparer lesdites parties creuses (58) les unes des autres lors de ladite reprise des parties creuses.

18. Un dispositif selon l'une quelconque des revendications 13 à 17, formé en soudant entre elles par fusion des première et seconde feuilles de matière polymère.

## Patentansprüche

1. Verbinder (10) zum Verbinden länglicher Gegenstände mit

einer ersten Folie (12) aus Polymermaterial, die in der Wärme praktisch formbeständig (wärmestabil) ist; einer zweiten Folie (18) aus Polymermaterial, die aus einer ursprünglich wärmestabilen Gestalt zu einer in der Wärme formunbeständigen (wärmeunstabilen) Gestalt gedehnt ist, wobei die erste Folie mit der zweiten Folie nach der Dehnung der zweiten Folie in der Weise verbunden ist, daß mindestens ein wesentlicher Teil der zweiten Folie von wärmestabilem Material überbrückt ist und die erste und die zweite Folie zusammen ein Hohlteil (20) mit offenen Enden bilden, in die hinein die Gegenstände einführbar sind; und

einer Einlage (16) in einer Position zwischen der ersten und der zweiten Folie innerhalb des offenen Hohlteils (20), wobei die Folien so ausgebildet sind, daß sie bei einer zum Aktivieren der Einlage (16) ausreichend hohen Temperatur nicht schmelzen, und daß die Zuführung von Wärme die zweite Folie zum Rückstellen um den eingeführten Gegenstand veranlaßt, während die erste Folie ihre wärmestabile Gestalt beibehält.

2. Verbinder nach Anspruch 1, worin die zweite Folie (18) so angeordnet ist, daß sie einen offenen Hohlteil von wärmerückstellbarem Polymermaterial bildet, und daß die erste Folie (12) an dem wärmerückstellbaren Hohlteil so befestigt ist, daß sie mindestens einen wesentlichen Teil der Hohlform mit wärmestabilem Material überbrückt.

3. Verbinder nach Anspruch 2, worin die zweite Folie (18) so angeordnet ist, daß mindestens zwei getrennte Hohlteile (20) entstehen.

4. Verbinder nach Anspruch 3, worin der erste Körper mindestens zwei der getrennten Hohlteile überbrückt und eine Mehrzahl von Hohlteilen (2i) mit offenen Enden bildet.

5. Verbinder nach einem der Ansprüch 2 bis 4, worin der oder jeder Hohlteil (20) die Form eines länglichen Kanals hat, der in seiner Längserstreckung praktisch vollständig von dem wärmestabilen Material überbrückt ist.

6. Verbinder nach Anspruch 4, ausgestattet mit mindestens einer schmelzbaren Einlage (16) in einer Lage zwischen der ersten und der zweiten Folie in mindestens jedem der Hohlteile (20) mit offenen Enden.

7. Verbinder nach Anspruch 6, worin die erste Folie (12) an bestimmten Stellen mit gedehnten Abschnitten (14) versehen ist, die Taschen zur Aufnahme der Einlagen (16) an der ersten Folie (12) darstellen.

8. Verbinder nach Anspruch 7, worin die Taschen (14) durch Eindrücken der Einlagen (16) in die Folie gebildet sind.

9. Verbinder nach Anspruch 8, worin die Einlagen (16) in die erste Folie (12) bei einer Temperatur gedrückt sind, die unterhalb des kristallinen Schmelzpunkts des ersten Folienmaterials liegt.

10. Verbinder nach einem der vorhergehenden Ansprüche, worin die zweite Folie (18) verformt worden ist, um mindestens zwei konkave Wirkzonen (20) zu bilden, die voneinander durch Bindezonen (22) getrennt sind, durch welche die zweite Folie mit der ersten Folie (12) fest verbunden ist, so daß der Abstand zwischen den Mitten der Arbeitszonen während der Rückstellung des Verbinders aufrechterhalten wird.

11. Verbinder nach einem der vorhergehenden Ansprüche, worin die erste und die zweite Folie anfänglich aus vernetzbarem oder teilvernetzbarem Material bestehen und verbunden und anschließend vernetzt werden.

12. Verbinder nach einem der vorhergehenden Ansprüche, worin das Verbinden durch Schmelzschweißen vorgenommen wird.

13. Verbinder zum Verbinden von länglichen Gegenständen, bestehend aus mindestens zwei wärmerückstellbaren Hohlteilen (58) mit offenen Ende für die Aufnahme der Gegenstände, die miteinander verbunden werden sollen, wobei der Verbinder aus zwei Folien aus Polymermaterial gebildet ist, von denen mindestens die eine aus einer ursprünglich wärmestabilen Gestalt zu einer wärmeunstabilen Gestalt gedehnt und anschliessend mit der anderen Folie längs einer Mehrzahl von Bindezonen (62) verbunden ist, die sich mit einer Mehrzahl von Wirkzonen (58) abwechseln, in denen die Folien nicht miteinander verbunden sind, wobei die Wirkzonen die wärmerückstellbaren Hohlteile mit offenen Enden darstellen und die Bindezonen nachgiebige Bereiche (2, 66) bilden, die sich dehnen lassen oder nachgeben zwischen den Hohlteilen unter der Spannung, die durch das Rückstellen der Hohlteile auf längliche Gegenstände ausgeübt wird, die in einem festen Abstand voneinander angeordnet sind.

14. Verbinder nach Anspruch 13, worin beide Folien verformt sind, um die wärmerückstellbaren Wirkzonen (58) zu bilden, die praktisch das gleiche Dehnungsverhältnis und praktisch die gleiche Rückstelltemperatur in jeder Folie haben.

15. Verbinder nach Anspruch 13 oder 14, worin die Folien anfänglich aus vernetzbarem oder teilvernetzbarem Material bestehen und verbunden und anschließend vernetzt werden.

16. Verbinder nach einem der Ansprüche 13 bis 15, worin die nachgiebigen Bereiche (62) Rillen aufweisen, die sich beim Rückstellen der Hohlteile dehnen.

17. Verbinder nach einem der Ansprüche 13 bis 16, worin die nachgiebigen Bereiche geschwächte Flächen (66) aufweisen, die nachgeben, um die Hohlteile (58) beim Rückstellen der Hohlteile voneinander zu trennen.

18. Verbinder nach einem der Ansprüche 13 bis 17, gebildet durch Schmelzverschweißen einer ersten und einer zweiten Folie aus Polymermaterial.

Fig.1.

Fig.2.

Fig.3.

Fig.4.

Fig.5.

O 045 612

**Fig.6.**

20ʹ    F    22ʹ    W₂

**Fig.7A.**    18

16
12    32

**Fig.7B.**    18

12    34

3

*Fig.8.*

*Fig.9.*

4

## Fig.10.

## Fig.11.

**Fig.12.**